# EUROPÄISCHE PATENTSCHRIFT

(11) **EP 0 742 782 B1**
(45) Veröffentlichungstag und Bekanntmachung des Hinweises auf die Patenterteilung: **06.05.1998**
(21) Anmeldenummer: 95907003.8
(22) Anmeldetag: 31.01.1995
(51) Int. Cl.: C01G 23/00, C01G 25/00, C01G 19/00, C08K 3/24

(54) **BASISCHE SCHICHTGITTERVERBINDUNGEN**
BASIC LAYERED LATTICE COMPOUNDS
COMPOSES BASIQUES A RESEAU STRATIFIE

(30) Priorität: 03.02.1994 AT 203/94; 03.02.1994 AT 204/94; 08.11.1994 DE 4439934
(43) Veröffentlichungstag der Anmeldung: 20.11.1996
(73) Patentinhaber: CHEMSON POLYMER-ADDITIVE GESELLSCHAFT M.B.H., 9601 Arnoldstein (AT)
(72) Erfinder: SCHILLER, Michael, . (AT); HENSEL, Hartmut, A-9073 Viktring (AT); KRIVANEC, Heinz, A-1130 Wien (AT); PACHER, Karoline, A-9556 Liebenfels (AT); EBNER, Paul, . (AT); DOLLESCHAL, Klaus, A-9500 Villach (AT); LATTACHER, Emil, . (AT); SUMMERER, Christina, A-9542 Afritz (AT)
(74) Vertreter: Viering, Jentschura & Partner
(86) Internationale Anmeldenummer: EP9500340
(87) Internationale Veröffentlichungsnummer: WO9521127

(56) Entgegenhaltungen:
- EP-A- 0 063 180
- EP-A- 0 069 594
- EP-A- 0 189 899
- EP-A- 0 232 094
- DE-A- 3 019 632
- US-A- 4 537 865
- CHEMICAL ABSTRACTS, Band 100, Nr. 4, 23 Jänner 1984, Columbus, OH (US); P. TASSOT, Seite 389, AN 28808b

## Beschreibung

Die Erfindung betrifft basische Schichtgitterverbindungen, ein Verfahren zu deren Herstellung und deren Verwendung in einer halogenhaltigen Harzzusammensetzung mit einer verbesserten Thermostabilität, Anfangsfarbe und einem verbessertem Farbverlauf.

Ein halogenhaltiges thermoplastisches Harz, wie z.B. Polyvinylchlorid (PVC), geht bei Durchführung einer Schmelzverformung in eine Polyenstruktur über, wobei Salzsäure eliminiert und das Polymere verfärbt wird. Um die Thermostabilität des Polymeren zu verbessern, ist es üblich, Metallcarboxylate als Stabilisatoren in das Harz einzuarbeiten. Da jedoch die Einarbeitung der Stabilisatoren allein bei einem längeren Schmelzformverfahren zu einem sogenannten Metallverbrennen führen kann, welches eine Schwärzung des Polymeren hervorruft, ist es allgemeine Praxis, einen Costabilisator, wie z.B. Polyole (wie Pentaerythrit), organische Phosphorigsäureester (wie Triphenylphosphit), Epoxiverbindungen (wie epoxidiertes Sojaöl) o,ä. zuzusetzen.

Da basische Bleisalze ebenso wie andere schwermetallhaltige Stabilisatoren als toxisch eingestuft sind, versucht man Stabilisierungsalternativen zu finden. Es ist eine Vielzahl von Kombinationen aus anorganischen und organischen Verbindungen als Stabilisatoren für halogenhaltige Polymere bekannt. In der DE 30 19 632 und in der EP 189 899 werden Hydrotalcite als Stabilisatoren vorgeschlagen. Diese Verbindungen sind Mischungen aus Ca/Zn-Metallcarboxylaten in bezug auf die Hitzestabilität und die Transparenz betrifft überlegen. Jedoch kann durch die Verwendung von Hydrotalciten das Problem der Verfärbung des Polymeren während der Verarbeitung nicht gelöst werden. Gemäß der EP 63 180 wird vorgeschlagen, zur Lösung dieses Problems Kombinationen aus Hydrotalciten und 1,3-Diketoverbindungen zu verwenden.

In den DE 39 41 902 und DE 41 06 411 bzw. in den DE 40 02 988 und DE 41 06 404 sowie in DE 41 03 881 werden basische Calcium-Aluminium-Hydroxy-Phosphite bzw. basische Calcium-Aluminium-Hydroxy-Carboxylate sowie Hydrocalumite als Stabilisatoren für halogenhaltige Polymere, insbesondere PVC, vorgeschlagen. Diese Verbindungen sind Mischungen mit Hydrotalciten, was die Hitzestabilität und die Transparenz betrifft, unterlegen. Weiterhin können durch die Verwendung derartiger Verbindungen mit Hydratwasser Probleme bei der Verarbeitung des halogenhaltigen Harzes durch die Abspaltung des Kristallwassers auftreten; vgl. M. Meyn "Doppelhydroxide und Hydroxidoppelsalze - Synthese, Eigenschaften und Anionenaustauschverhalten", Dissertation, Kiel 1991. In der EP-A-02 56 872 wird vorgesehlagen, diesen Nachteil durch die Zugabe von feinstteiligem Magnesiumoxid zu beheben.

In den DE 41 03 916 und DE 41 06 403 werden basische Hydoxyverbindungen aus zwei- und dreiwertigen Metallionen, die als "nicht vom Hydrotalcittyp" definiert werden, u.a. als PVC-Stabilisatoren beansprucht. Diese Verbindungen sind ebenso Mischungen mit Hydrotalciten, was die Hitzestabilität und die Transparenz angeht, unterlegen. Weiterhin können auch hier bei der Verwendung derartiger Verbindungen mit Hydratwasser Probleme bei der Verarbeitung des halogenhaltigen Harzes durch die Abspaltung des Kristallwassers auftreten.

In der DE 42 38 567 werden Granate mit ein-, zwei-, drei- und vierwertigen Metallionen, die eine Raumnetzstruktur ähnlich dem Grossular besitzen, als PVC-Stabilisatoren beansprucht. Diese Verbindungen sind ebenso Mischungen mit Hydrotalciten, was die Hitzestabilität und die Transparenz angeht, unterlegen. Weiterhin wirken Granate abrasiv. Bekanntermaßen werden Granate in der Technik als Schleifmittel für optische Linsen und zum Sandstrahlen verwendet.

Der Erfindung liegt die Aufgabe zugrunde, neue Verbindungen sowie ein Verfahren zu deren Herstellung bereitzustellen, die sich insbesondere als Stabilisatoren für halogenhaltige Polymere eignen, ohne die oben erwähnten Nachteile der bekannten Stabilisatoren aufzuweisen, insbesondere als nichttoxisch eingestuft werden.

Diese Aufgabe wird erfindungsgemäß gelöst durch die Bereitstellung basischer Schichtgitterverbindungen der allgemeinen Formel (I):

Me^{III} ₐ Me^{II} _{b} (Me^{IV})_{c}(OH)_{d}Oₑ Aⁿ _{f} x mH₂O (I)

worin bedeuten:
- Me^{II}: ein divalentes Metall, ausgewählt aus der Gruppe, die besteht aus Magnesium, Calcium, Barium, Strontium, Zink, Blei^{II}, Cadmium oder einer Mischung davon;
- Me^{III}: ein trivalentes Metall, ausgewählt aus der Gruppe, die besteht aus Aluminium, Wismuth, Antimon, Titan^{III}, Eisen^{III} oder einer Mischung davon;
- Me^{IV}: ein vierwertiges Metall, ausgewählt aus der Gruppe, die besteht aus Titan^{IV}, Zinn, Zirkon oder einer Mischung davon, oder Me^{IV}O, worin Me^{IV} die zuvor angegebene Bedeutung hat;
- Aⁿ: ein Anion bedeutet, das die Wertigkeit n hat und aus der Gruppe, die aus Sulfat, Sulfit, Sulfid, Thiosulfat, Hydrogensulfat, Hydrogensulfit, Hydrogensulfid, Peroxid, Peroxosulfat, Carbonat, Hydrogencarbonat, Nitrat, Nitrit, Phosphat, Pyrophosphat, Phophit, Pyrophosphit, Hydrogenphosphat, Hydrogenphosphit, Dihydrogenphosphat, Dihydrogenphosphit, Halogenid, Pseudohalogenid, Halogenit, Halogenat, Perhalogenat, I_{3⁻}, Permanganat, Amid, Azid, Hydroxyd, Hydroxylamid, Hydrazid, Acetylacetonat, einem Anion einer organischen Carbonsäure mit ein oder mehreren Carbonsäuregruppen, einem Anion von ein- oder mehrwertigen Phenolen, oder einer Mischung davon besteht, ausgewählt wird;
wobei a/b= 1:1 bis 1:10; 2 ≤ b ≤ 10 ; 0< c <5; 0 ≤ e; 0 ≤ m < 5 betragen und d, e und f so gewählt sind, daß ein basisches, ladungsfreies Molekül entsteht.

Bevorzugt sind darunter basische Schichtgitterverbindungen bei denen das Verhältnis a/b im Bereich von 1:1 bis 1:9 liegt.

Besonders bevorzugt sind basische Schichtgitterverbindungen der oben angegebenen allgemeinen Formel (I), worin Me^{II}, Me^{III} und Aⁿ die oben angegebenen Bedeutungen besitzen und Me^{IV} Me^{IV}O, wobei Me^{IV} ein vierwertiges Metall, ausgewählt aus der Gruppe, die besteht aus Titan^{IV}, Zinn, Zirkon oder einer Mischung davon, bedeutet und a/b= 1:1 bis 1:10; 2 ≤ b ≤ 10 ; 0< c <5; 0 ≤ d; 0 ≤ e; 0 ≤ m < 5 betragen und d, e und f so gewählt sind, daß ein basisches, ladungsfreies Molekül entsteht.

Unter den letztzgenannten basischen Schichtgitterverbindungen sind solche ganz besonders bevorzugt, bei denen das Verhältnis a/b im Bereich von 2:4 bis 2:6 liegt.

Ebenfalls besonders bevorzugt sind basische Schichtgitterverbindungen der allgemeinen Formel (II):

Me^{III} ₐ (Me^{II} _{b} Me^{IV} _{(1-b/2)})₍₁₋ₐ₎(OH)₂ Aⁿ _{a/n} x mH₂O (II)

worin Me^{II}, Me^{III} und Aⁿ die oben angegebenen Bedeutungen besitzen und Me^{IV} ein vierwertiges Metall, ausgewählt aus der Gruppe, die besteht aus Titan^{IV}, Zinn, Zirkon oder einer Mischung davon, bedeutet und 0,05 < a < 0,5, 0 < b < 1 und 0 ≤ m < 2 sind.

Weiter besonders bevorzugt sind basische Schichtgitterverbindungen der allgemeinen Formel (III):

Me^{III} ₐ (Me^{II} _{b} Me^{IV} _{(1-b/2)})₍₁₋ₐ₎(OH)_{c} Aⁿ _{d} x mH₂O (III)

worin Me^{II}, Me^{III} und Aⁿ die oben angegebenen Bedeutungen besitzen und Me^{IV} ein vierwertiges Metall, ausgewählt aus der Gruppe, die besteht aus Titan^{IV}, Zinn, Zirkon oder einer Mischung davon, bedeutet und 0,05 < a < 0,5, 0 < b < 1, 0 ≤ m < 2 und c+d=2+a, worin c=2 ausgenommen ist, sind.

Überraschenderweise hat sich gezeigt, daß die erfindungsgemäßen basischen Schichtgitterverbindungen halogenhaltigen, thermoplastischen Harzen und den daraus hergestellten Teilen eine höhere Hitzestabilität im Vergleich zu halogenhaltigen, thermoplastischen Harzen und den daraus hergestellten Teilen, die nicht die erfindungsgemäßen Verbindungen enthalten, verleihen. Die erfindungsgemäßen Verbindungen verhindern Verfärbungen bei der Herstellung von z.B. Hart-PVC-Extrudaten. Sowohl der Farbverlauf als auch die Bewitterungsstabilität der mit den erfindungsgemäßen Verbindungen stabilisierten Probekörpern sind besser als bei solchen Probekörpern, die nicht die erfindungsgemäßen Verbindungen enthalten.

Gegenstand der Erfindung ist ebenso ein Verfahren zur Herstellung der erfindungsgemäßen Schichtgitterverbindungen, das dadurch gekennzeichnet ist, daß Me^{II} als Hydroxid, Oxid oder eine Mischung davon, Me^{III} als Hydroxid, auch als Mischsalz mit NaOH, sowie Me^{IV} als Hydroxid, Oxysalz, Oxid oder Mischungen davon mit einer entsprechenden Säure, dem Salz der entsprechenden Säure oder Mischungen davon, wobei das Anion der Säure oben angegebene Bedeutung hat, in einem wäßrigem Medium bei einem pH-Wert von 8 bis 12 bei Temperaturen von 20 bis 250°C umgesetzt werden und man das Reaktionsprodukt in an sich bekannter Weise abtrennt und gewinnt.

Das aus der oben beschriebenen Umsetzung direkt anfallende Reaktionsprodukt kann nach bekannten Verfahren vom wäßrigen Reaktionsmedium abgetrennt werden, vorzugsweise durch Filtration. Die Aufarbeitung des abgetrennten Reaktionsproduktes erfolgt ebenfalls in an sich bekannter Weise, beispielsweise durch Waschen des Filterkuchens mit Wasser und Trocknen des gewaschenen Rückstands bei Temperaturen von beispielsweise 60 - 150°C, vorzugsweise bei 90 - 120°C.

Für die Umsetzung kann im Falle des Aluminiums sowohl feinteiliges, aktives Metall-(III)-hydroxid in Kombination mit Natriumhydroxid, als auch ein NaAlO₂ eingesetzt werden. Metall-(II) kann in Form von feinteiligem Metall-(II)-oxid oder -hydroxid oder Mischungen davon verwendet werden. Metall-(IV) kann in Form von feinteiligem und/oder gelöstem Metall-(IV)-oxid, -hydroxid oder -oxy-salzen oder Mischungen davon verwendet werden. Die entsprechenden Säureanionen können in unterschiedlich konzentrierter Form z.B. direkt als Säure oder aber als Salz, beispielsweise als Alkalisalz, eingesetzt werden.

Die Umsetzungstemperaturen liegen zwischen etwa 20 - 250°C, vorzugsweise im besonderen zwischen etwa 60 und 180°C. Katalysatoren oder Beschleuniger sind nicht erforderlich. Bei den erfindungsgemäßen Verbindungen kann das Kristallwasser ganz oder teilweise durch thermische Behandlung entfernt werden.

Bei ihrer Anwendung als Stabilisatoren spalten die erfindungsgemäßen, getrockneten und hydratwasserfreien Schichtgitterverbindungen bei den für Hart-PVC üblichen Verarbeitungstemperaturen von 160 - 200°C kein Wasser oder ein anderes Gas ab, so daß in den Formteilen keine störende Blasenbildung auftritt.

Zur Verbesserung ihrer Dispergierbarkeit in halogenhaltigen thermoplastischen Harzen können die erfindungsgemäßen Verbindungen in bekannter Weise mit oberflächenaktiven Mitteln gecoatet werden.

Die vorliegende Erfindung wird nachstehend näher beschrieben.

Beispiele für das erfindungsgemäß verwendbare, halogenhaltige thermoplastische Harz sind PVC, Polyvinylidenchlorid, chloriertes oder chlorsulfoniertes Polyethylen, chloriertes Polypropylen oder chloriertes Ethylen/Vinylacetat-Copolymer. Besonders vorteilhaft sind Harze vom PVC-Typ, d.h. Vinylchlorid-Homopolymere und Copolymere von Vinylchlorid mit anderen Monomeren.

Bezüglich der o.g. allgemeinen Formel (I) der basischen Schichtgitterverbindungen gilt, daß Mg, Ca, Sn²⁺ und Zn bevorzugte Vertreter für Me^{II}, Al, Bi³⁺, Sb³⁺ und Ti³⁺, wobei Al darunter bevorzugt ist, und Ti⁴⁺, Sn⁴⁺ und Zr⁴⁺ bevorzugte Vertreter für Me^{IV} sind.

Das Anion der allgemeinen Formel Aⁿ⁻ kann Sulfat, Sulfit, Sulfid, Thiosulfat, Peroxid, Peroxosulfat, Hydrogenphosphat, Hydrogenphosphit, Carbonat, Halogenide, Nitrat, Nitrit, Hydrogensulfat, Hydrogencarbonat, Hydrogensulfit, Hydrogensulfid, Dihydrogenphosphat, Dihydrogenphosphit, ein Monocarbonsäureanion wie Acetat und Benzoat, Amid, Azid, Hydroxyd, Hydroxylamid, Hydrazid, Acetylacetonat, Phenolat, Pseudohalogenid, Halogenit, Halogenat, Perhalogenat, I_{3⁻}, Permanganat, ein Dianion von Dicarbonsäuren wie Phthalat, Oxalat, Maleat oder Fumarat, Bisphenolate, Phosphat, Pyrophosphat, Phosphit, Pyrophosphit, ein Trianion von Tricarbonsäuren wie Citrat, Trisphenolate und ein anderes Anion einer organischen Carbonsäure mit ein oder mehreren Carbonsäuregruppen, ein Anion von ein- oder mehrwertigen Phenolen oder eine Mischung davon sein. Unter diesen sind Hydroxid, Carbonat, Phosphit, Maleat, Fumarat und Phthalat bevorzugt.

Die erfindungsgemäßen basischen Schichtgitterverbindungen können mit einer höheren Fettsäure, z.B. Stearinsäure, einem anionischen oberflächenaktiven Agens, einem Silankuppler, einem Titanat-Kuppler, einem Glycerinfettsäureester o.ä. oberflächenbehandelt sein, um die Dispergierbarkeit in dem halogenhaltigen thermoplastischen Harz zu verbessern.

Als Additive zur Erhöhung der stabilisierenden Wirkung der erfindungsgemäßen Schichtgitterverbindungen können den halogenhaltigen thermoplastischen Harzen zusätzlich Metallcarboxylate [Verbindung (A)] zugesetzt werden. Beispiele für die erfindungsgemäß verwendbaren Metallcarboxylate sind beispielsweise die Salze höherer Fettsäuren, Naphthensäure o.ä., von Metallen der zweiten Gruppe des Periodensystems der Elemente. Beispiele für geeignete Metalle der zweiten Gruppe sind Magnesium, Calcium, Strontium, Barium, Zink, Blei, Cadmium o.ä. Besonders vorteilhaft sind derartige Salze von höheren Fettsäuren wie Stearin-, Palmitin-, Myristin-, Laurin-, Rizinolsäure o.ä.. Besonders wirksam für den Farbverlauf sind Zinksalze. Deshalb ist es erfindungsgemäß bevorzugt, ein Zinksalz einer höheren Fettsäure zuzusetzen. Obgleich die obengenannten Metallcarboxylate einzeln verwendet werden können, kann ein noch größerer stabilisierender Effekt bei Verwendung von zwei oder mehr derselben in Kombination erzielt werden.

Während die Zugabe der erfindungsgemäßen basischen Schichtgitterverbindungen zu den halogenhaltigen thermoplastischen Harzen bereits wirksam zur Erzielung der gewünschten Verbesserungen ist, können verbesserte Effekte erzielt werden, wenn einer oder mehr bekannte Stabilisatoren für halogenhaltige Polymere zusätzlich allein oder in Kombination mit Verbindung (A) verwendet werden. So kann die Kombination mit zumindest einer Verbindung (B), die aus der Gruppe der 1.3-Diketoverbindungen, der organischen Ester der phosphorigen Säure, der Polyole und der Aminosäurederivate ausgewählt wird, zu einer deutlichen Verbesserung der Anfangsfarbe führen.

Beispiele für die o.g. 1.3-Diketoverbindungen sind u.a. Dibenzoylmethan, Stearoylbenzoylmethan, Palmitoylbenzoylmethan, Myristoylbenzoylmethan, Lauroylbenzoylmethan, Benzoylaceton, Acetylaceton, Tribenzoylmethan, Diacetylacetobenzol, p-Methoxystearoylacetophenon, Acetoessigsäureester und Acetylaceton.

Beispiele für die o.g. Ester der phosphorigen Säure sind u.a. Triarylphosphite, wie Triphenylphosphit, Tris(p-nonylphenyl)phosphit o.ä.; Alkylarylphosphite, wie Monoalkyldiphenylphosphite, z.B. Diphenylisooctylphosphit, Diphenylisodecylphosphit o.ä.; und Dialkylmonophenylphosphite, wie Phenyldiisooctylphosphit, Phenyldiisodecylphosphit o.ä.; und Trialkylphosphite, wie Triisooctylphosphit, Tristearylphosphit o.ä.

Beispiele für die o.g. Polyole sind Trismethylolpropan, dessen Di-(trismethylolpropan), Erythritol, Pentaerythritol, Dipentaerythritol, Sorbitol, Mannitol o.ä.,

Beispiele für die o.g. Aminosäurederivate sind u.a. Glycin, Alanin, Lysin, Tryptophan, Acetylmethionin, Pyrrolidoncarbonsäure, β-Aminocrotonsäure, α-Aminoacrylsäure, α-Aminoadipinsäure o.ä. sowie die entsprechenden Ester. Die Alkoholkomponenten dieser Ester umfassen u.a. einwertige Alkohole, wie Methylalkohol, Ethylalkohol, Propylalkohol, i-Propylalkohol, Butylalkohol, α- Ethylhexanol, Octylalkohol, i-Octylalkohol, Laurylalkohol, Stearylalkohol o.ä., sowie Polyole, wie Ethylenglycol, Propylenglycol, 1,3-Butandiol, 1,4-Butandiol, Glycerol, Diglycerol, Trismethylolpropan, Pentaerythritol, Dipentaerythritol, Erythrithol, Sorbitol, Mannitol o.ä.

Außerdem kann die Zugabe von zumindest einer Verbindung (C), die aus der Gruppe der Antioxidantien und der Epoxyverbindungen ausgewählt wird, zu einer deutlichen Verbesserung des Farbverlaufs führen.

Beispiele für die o.g. Antioxidantien sind u.a. 2,5-Di-tert.-butyl-hydrochinon, 2,6-Di-tert.-butyl-4-methylphenol, 4,4'-Thiobis-(3-methyl-6-tert.-butyl-phenol), 2,2'-Methylenbis(4-methyl-6-tert.-butylphenol), Stearyl-3-(3',-5'-di-tert.-butyl-4'hydroxyphenyl)propionat o.ä.

Zu den o.g. Epoxyverbindungen gehören u.a. verschiedene tierische oder pflanzliche Öle, wie Epoxysojaöl, Epoxyrapsöl o.ä., epoxidierte Fettsäureester, wie epoxidiertes Epoxymethyloleat, Epoxybutyloleat o.ä., epoxidierte alicyclische Verbindungen, Glycidether , wie Bisphenol-A-diglycidether, Bisphenol-F-diglycidether o.ä.; Glycidester, wie Glycidylacrylat, Glycidylmethacrylat, deren Polymere, Copolymere o.ä.; und epoxidierte Polymere, wie epoxidiertes Polybutadien, epoxidiertes ABS o.ä.

Die Zugabe von zumindest einer der beiden letztgenannten Verbindungen (B) und (C) ist sehr vorteilhaft.

Die Rezepturen für halogenhaltige thermoplastische Harze, in denen die o.g. Substanzen verwendet werden, sind folgende, wobei phr für Teile auf 100 Teile Harz steht:

Erfindungsgemäße basische Schichtgitterverbindungen mit der

| | |
|---|---|
| Formel I | 0.1 bis 5, vorzugsweise 0,5 bis 3 phr; |
| Verbindung (A) | 0 bis 5, vorzugsweise 0.5 bis 3 phr; |
| Verbindung (B) | 0 bis δ, vorzugsweise 0.1 bis 3 phr; |
| Verbindung (C) | 0 bis 5, vorzugsweise 0.05 bis 4 phr. |

Der erfindungsgemäßen halogenhaltigen thermoplastischen Harzzusammensetzung können weiterhin die dem Fachmann bekannten Zusätze wie Füllstoffe, Gleitmittel, Weichmacher, Farbstoffe, Pigmente, Antistatikmittel, oberflächenaktive Agentien, Schaumbildner, Schlagzähigkeitsmodifier, UV-Stabilisatoren zugesetzt werden.

Erfindungsgemäß können die Thermostabilität und die Anfangsfarbe sowie der Farbverlauf des halogenhaltigen thermoplastischen Harzes durch Zugabe der Metallcarboxylate (A), vorzugsweise zusammen mit der Verbindung (B) oder (C) oder einer Mischung der Verbindungen (B) und (C) in den angegebenen Mengen weiter verbessert werden. Es wird angenommen, daß die Metallcarboxylate (A) als Stabilisator, die Verbindung (B) und die Verbindung (C) als Costabilisatoren wirken.

Die erfindungsgemäße Zusammensetzung weist kein Plate out-Phänomen während des Kalandrierens auf und erlaubt das Extrudieren im Langzeitbetrieb. Darüber hinaus sind die resultierenden Produkte frei von einer Verfärbung.

Die vorliegende Erfindung ist daher auch gerichtet auf die halogenhaltigen thermoplastischen Harze mit einem Gehalt von 0,1 bis 5 Teilen der erfindungsgemäßen basischen Schichtgitterverbindungen, und insbesondere auf halogenhaltige thermoplastische Harze mit einem Gehalt von 0,1 bis 5 Teilen der erfindungsgemäßen basischen Schichtgitterverbindungen,, die aus der Gruppe, bestehend aus PVC, Polyvinylidenchlorid, chloriertem oder chlorsulfoniertem Polyethylen, chloriertem Polypropylen oder chloriertem Ethylen/Vinylacetat-Copolymer, ausgewählt werden.

Die vorliegende Erfindung ist daher ein bemerkenswerter, neuer Beitrag zur Entwicklung des Standes der Technik, insbesondere in der Verarbeitung von PVC und anderen halogenhaltigen thermoplastischen Harzen.

Die Erfindung wird durch die folgenden Beispiele näher erläutert, ohne jedoch darauf beschränkt zu sein.

### I. Herstellung der erfindungsgemäßen Verbindungen gemäß der Ausführungsform nach Anspruch 3

### Beispiel 1 (Verbindung 1)

In einem 1 L Rundkolben werden 0.2 mol (23.6 g) NaAl(OH)₄ in 300 mL destilliertem Wasser gelöst. Dazu gibt man 0.4 mol (16.0 g) Magnesiumoxid und läßt eine halbe Stunde rühren. Anschließend gibt man mittels Tropftrichter 0.006 mol (0.96 g) Titanylsulfat in 10 mL destilliertem Wasser zu und läßt wiederum 30 min. rühren. N.un wird auf pH-Wert von 9 CO₂ eingeleitet, das danach wieder auf pH-Wert von 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 10 µm gemahlen, mit 2% Natriumstearat gecoatet und bei 120°C im Vakuum getrocknet.

### Beispiel 2 (Verbindung 2)

Die Umsetzung erfolgte wie in Beispiel 1, jedoch wurden 0.012 mol (1.91 g) Titanylsulfat verwendet.

### Beispiel 3 (Verbindung 3)

Die Umsetzung erfolgte wie in Beispiel 1, jedoch wurden 0.024 mol (3.82 g) Titanylsulfat verwendet.

### Beispiel 4 (Verbindung 4)

Die Umsetzung erfolgte wie in Beispiel 1, jedoch wurden 0.45 mol (18.0 g) Magnesiumoxid und 0.036 mol (5.73 g) Titanylsulfat verwendet. Weiterhin wurde das Reaktionsprodukt 4 h bei 230°C getrocknet.

### Beispiel 5 (Verbindung 5)

Die Umsetzung erfolgte wie in Beispiel 1, jedoch wurden 0.3 mol (12.0 g) Magnesiumoxid und 0.042 mol (6.68 g) Titanylsulfat verwendet. Weiterhin wurde das Reaktionsprodukt 100 h bei 230°C getrocknet.

**Tab. 1 -**

| Erhaltene erfindungsgemäße Verbindungen und deren analytische Werte | | | | | |
|---|---|---|---|---|---|
| | %Mg | %Ti | %Al | %CO₂ | Formel |
| **Verbindg 1** | 20.9 | 0.6 | 11.6 | 10.1 | Mg_{4.0}TiO_{0.06}Al_{2.0}(OH)_{12.0}(CO₃)_{1.06}*2.0H₂O |
| **Verbindg 2** | 21.5 | 1.4 | 12.5 | 11.1 | Mg_{4.0}TiO_{0.12}Al_{2.0}(OH)_{12.0}(CO₃)_{1.12}*0.6H₂O |
| **Verbindg 3** | 19.9 | 2.3 | 11.1 | 7.9 | Mg_{4.0}TiO_{0.24}Al_{2.0}(OH)_{12.8}(CO₃)_{0.84}*3.0H₂O |
| **Verbindg 4** | 22.7 | 3.5 | 10.8 | 6.1 | Mg_{4.5}TiO_{0.36}Al_{2.0}(OH)_{16.0}(CO₃)_{0.72} |
| **Verbindg 5** | 21.0 | 5.6 | 15.5 | 3.7 | Mg_{3.0}TiO₀.₄₂Al_{2.0}(OH)_{8.6}O_{1.8}(CO₃)_{0.3} |

### Anwendung dieser Verbindungen als Stabilisatoren

In den nach folgenden Beispielen wird die Hitzestabilität, die Anfangsfarbe und der Farbverlauf von PVC-Formkörpern, denen erfindungsgemäße Verbindungen sowie zu Vergleichzwecken keine erfindungsgemäßen Stabilisatoren zugesetzt wurden, bewertet. Dazu wurden PVC-Harzmassen, deren Zusammensetzungen unten angegeben sind und wobei "Testprobe" für die Verbindungen 1-5 aus den Herstellungsbeispielen steht, auf einem Laborwalzwerk fünf Minuten bei 180°C homogenisiert und plastifiziert. Aus dem so ergestellten etwa 1 mm dicken Walzfell wurde ein Probestreifen von 10 mm Breite herausgeschnitten und im MATHIS-Thermo-Ofen bei 180°C getempert. Im Abstand von 10 min. wurde der Teststreifen 23 mm aus dem Ofen herausgefahren, bis sich eine Schwarzverfärbung zeigte (MTT (Mathis-Thermo-Test) in min. = Stabilität).

**Tab. 2 -**

| Testrezepturen | | |
|---|---|---|
| Rezeptur | 1 | 2 |
| PVC | 100 | 100 |
| Kreide | 5 | 40 |
| DOP | - | 40 |
| TiO₂ | 4 | - |
| Modifier | 7 | - |
| Fließhilfe | 1 | - |
| GM^{a)} | 0.3 | - |
| Bisphenol A | 0.1 | 0.1 |
| Zinkstearat | 1.5 | 0.8 |
| Dipentaerythrit | 0.9 | - |
| Dibenzoylmethan | 0.25 | 0.25 |
| Testprobe | 1 | 3.25 |

| | | |
|---|---|---|
| a) Esterwachs als Gleitmittel DOP = Dioctylphthalat | | |

### Beispiel 6

**Tab. 3 -**

| Ergebnisse der Anwendung der erfindungsgemäßen Verbindungen aus Beispiel 1 bis 5 in Rezeptur 1 (YIO = Yellowness Index für die Anfangsfarbe) | | |
|---|---|---|
| Verbindg | MTT | YIO |
| ohne | 90 | 7.5 |
| Alcamizer 1 | 145 | 8.8 |
| 1 | 155 | 7.3 |
| 2 | 165 | 6.7 |
| 3 | 180 | 8.5 |
| 4 | 150 | 7.3 |
| 5 | 165 | 6.9 |
| Alcamizer 1: handelsübliches Hydrotalcit gemäß DE-OS-30 19 632 | | |

### Beispiel 7

**Tab. 4 -**

| Ergebnisse der Anwendung der erfindungsgemäßen Verbindungen aus Beispiel 1 bis 5 in Rezeptur 2 (VDE = Kongorot-Wert) | | | |
|---|---|---|---|
| Verbindung | MTT | VDE | YIO |
| Alcamizer 1 | 320 | 90 | 43 |
| 1 | 345 | 95 | 43 |
| 2 | 360 | 99 | 43 |
| 3 | 365 | 97 | 43 |
| 4 | 365 | 99 | 43 |
| 5 | 340 | 92 | 42 |

Es zeigte sich in den Vergleichsversuchen die Überlegenheit der erfindungsgemäß stabilisierten Harze gegenüber den nicht oder mit einem aus dem Stand der Technik bekannten Stabilisator auf Hydrotalcit-Basis stabilisierten halogenhaltigen thermoplastischen Harzen.

### II. Herstellung der erfindungsgemäßen Verbindungen gemäß der Ausführungsform nach Anspruch 5

### Beispiel 1 (Verbindg 1)

In einem 500mL-Dreihalskolben mit Kühler, Thermometer und Tropftrichter werden in 150 mL destilliertes Wasser 0.48 mol (35.5 g) Ca(OH)₂ suspendiert. Dazu tropft man langsam unter Rühren 0.34 mol (31.2 g) NaAlO₂ und gibt 0.17 mol (19.7 g) Maleinsäure dazu. Dann läßt man 30 min. rühren. Danach kühlt man auf ca. 0°C und tropft vorsichtig 0.09 mol (17.0 g) Titantetrachlorid dazu. Anschließend erhitzt man auf 85°C und rührt bei dieser Temperatur fünf Stunden lang. Danach wird abfiltriert, auf < 1 µm gemahlen, gewaschen und bei etwa 120°C im Vakuum getrocknet.
- Erhaltenes Produkt:: Ca_{0.48}Ti_{0.09}Al_{0.34}(OH)₂(C₄H₂O₄)_{0.17}
- Analyse :: Ca 21.9% (ber. 22.3)
Ti 4.5% (ber. 5.0)
Al 11.0% (ber. 10.7)

### Beispiel 2 (Verbindg 2)

In einem 500mL-Dreihalskolben mit Kühler, Thermometer und Tropftrichter werden in 150 mL destilliertes Wasser 0.41 mol (30.3 g) Ca(OH)₂ suspendiert. Dazu tropft man langsam unter Rühren 0.37 mol (30.3 g) NaAlO₂ und gibt 0.19 mol (22.6 g) Maleinsäure dazu. Dann läßt man 30 min. rühren. Danach kühlt man auf ca. 0°C und tropft vorsichtig 0.11 mol (28.6 g) Zinntetrachlorid dazu. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.41}Sn_{0.11}Al_{0.37}(OH)₂(C₄H₂O₄)_{0.19}
- Analyse :: Ca 18.1% (ber. 17.2)
Sn 14.1% (ber. 13.8)
Al 11.5% (ber. 10.5)

### Beispiel 3 (Verbindg 3)

In einem 500mL-Dreihalskolben mit Kühler, Thermometer und Tropftrichter werden in 150 mL destilliertes Wasser 0.53 mol (39.2 g) Ca(OH)₂ suspendiert. Dazu tropft man langsam unter Rühren 0.29 mol (23.8 g) NaAlO₂. Dann läßt man eine halbe Stunde rühren. Danach kühlt man auf ca. 0°C und tropft vorsichtig 0.09 mol (21.0 g) Zirkontetrachlorid dazu. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.53}Zr_{0.09}Al_{0.29}(OH)₂(OH)_{0.29}*0.5H₂O
- Analyse :: Ca 25.2% (ber. 24.9)
Zr 9.3% (ber. 9.7)
Al 9.0% (ber. 9.2)

### Beispiel 4 (Verbindg 4)

In einem 500mL-Dreihalskolben mit Kühler, Thermometer und Tropftrichter werden in 150 mL destilliertes Wasser 0.42 mol (31.1 g) Ca(OH)₂ suspendiert. Dazu tropft man langsam unter Rühren 0.36 mol (29.5 g) NaAlO₂ und 0.18 mol (14.9 g) phosphorige Säure. Dann läßt man eine halbe Stunde rühren und kühlt anschließend auf ca 0°C ab. Bei dieser Temperatur tropft man dann vorsichtig 0.11 mol (20.9 g) Titantetrachlorid dazu. Dann erhitzt man auf 85°C und läßt bei dieser Temperatur fünf Stunden rühren. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.42}Ti_{0.11}Al_{0.36}(OH)₂(HPO₃)_{0.18}*0.5H₂O
- Analyse :: Ca 18.5% (ber. 18.8)
Ti 6.1% (ber. 5.9)
Al 10.5% (ber. 10.9)
P 6.8% (ber. 6.3)

### Beispiel 5 (Verbindg 5)

In einem 1 L Rundkolben werden 0.34 mol (40.1 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.08 mol (20.8 g) SnCl₄ zu und läßt wiederum einige Zeit rühren. Der pH-Wert liegt nach der Zugabe von SnCl₄ bei 7,4. Nach einer Stunde Rührzeit ist der pH-Wert auf 10,1 gestiegen. Nun wird auf pH-Wert von 9 CO₂ eingeleitet, das danach wieder auf pH-Wert 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Sn_{0.08}Al_{0.34}(OH)₂(CO₃)_{0.17}*0.3H₂O
- Analyse :: Mg 15.2% (ber. 14.9)
Sn 12.2% (ber. 11.8)
Al 12.2% (ber. 11.4)
CO₂ 8.3% (ber. 9.3)

### Beispiel 6 (Verbindg 6)

In einem 1 L Rundkolben werden 0.34 mol (40.1 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.08 mol (18.6 g) ZrCl₄ zu und läßt wiederum einige Zeit rühren. Der pH-Wert liegt nach der Zugabe von ZrCl₄ bei 10 . Nun wird auf pH-Wert von 9 CO₂ eingeleitet, das danach wieder auf pH-Wert von 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Zr_{0.08}Al_{0.34}(OH)₂(CO₃)_{0.17}*0.3H₂O
- Analyse :: Mg 16.1% (ber. 15.4)
Zr 8.8% (ber. 9.3)
Al 12.2% (ber. 11.8)
CO₂ 8.8% (ber. 9.6)

### Beispiel 7 (Verbindg 7)

In einem 1 L Rundkolben werden 0.32 mol (37.1 g) NaAl(OH)₄ in 300 mL destilliertem Wasser gelöst. Dazu gibt man 0.52 mol (20.8 g) Magnesiumoxid und läßt eine halbe Stunde rühren. Anschließend gibt man im Tropftrichter 0.08 mol (15.2 g) TiCl₄ zu und läßt wiederum einige Zeit rühren. Der pH-Wert liegt nach der Zugabe von TiCl₄ bei 10,7. Nun wird auf pH-Wert von 9 CO₂ eingeleitet, das danach wieder auf pH-Wert von 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.52}Ti_{0.08}Al_{0.32}(OH)₂(CO₃)_{0.16}*0.3H₂O
- Analyse :: Mg 16.7% (ber. 16.7)
Ti 5.3% (ber. 5.1)
Al 11.8% (ber. 11.6)
CO₂ 9.8% (ber. 10.0)

### Beispiel 8 (Verbindg 8)

In einem 1 L Rundkolben werden 0.34 mol (40.1 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.08 mol (20.8 g) SnCl₄ zu und läßt wiederum einige Zeit rühren. Der pH-Wert liegt nach der Zugabe von SnCl₄ bei 7,4. Nach einer Stunde Rührzeit ist der pH-Wert auf 10,1 gestiegen. Nun wird auf pH-Wert von 9 CO₂ eingeleitet, das danach wieder auf pH-Wert 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Sn_{0.08}Al_{0.34}(OH)₂(CO₃)_{0.17}*0.3H₂O
- Analyse :: Mg 14.2% (ber. 14.9)
Sn 11.0% (ber. 11.8)
Al 11.3% (ber. 11.4)
CO₂ 8.8% (ber. 9.3)

### Beispiel 9 (Verbindg 9)

In einem 1 L Rundkolben werden 0.34 mol (40.1 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.08 mol (18.6 g) ZrCl₄ zu und läßt wiederum einige Zeit rühren. Der pH-Wert liegt nach der Zugabe von ZrCl₄ bei 10 . Nun wird auf pH-Wert von 9 CO₂ eingeleitet, das danach wieder auf pH-Wert von 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Zr_{0.08}Al_{0.34}(OH)₂(CO₃)_{0.17}*0.3H₂O
- Analyse :: Mg 15.2% (ber. 15.4)
Zr 9.9% (ber. 9.3)
Al 11.5% (ber. 11.8)
CO₂ 9.8% (ber. 9.6)

### Beispiel 10 (Verbindg 10)

In einem 1 L Rundkolben werden 0.32 mol (37.1 g) NaAl(OH)₄ in 300 mL destilliertem Wasser gelöst. Dazu gibt man 0.52 mol (20.8 g) Magnesiumoxid und läßt eine halbe Stunde rühren. Anschließend gibt man im Tropftrichter 0.08 mol (15.2 g) TiCl₄ zu und läßt wiederum einige Zeit rühren. Der pH-Wert liegt nach der Zugabe von TiCl₄ bei 10,7. Nun wird auf pH-Wert von 9 CO₂ eingeleitet, das danach wieder auf pH-Wert von 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.52}Ti_{0.08}Al_{0.32}(OH)₂(CO₃)_{0.16}*0.3H₂O
- Analyse :: Mg 17.2% (ber. 16.7)
Ti 5.6% (ber. 5.1)
Al 11.6% (ber. 11.6)
CO₂ 9.5% (ber. 10.0)

### Anwendung dieser Verbindungen als Stabilisatoren

In den nach folgenden Beispielen wird die Hitzestabilität, die Anfangsfabe und der Farbverlauf von PVC-Formkörpern, denen erfindungsgemäße Verbindungen sowie zu Vergleichzwecken keine Costabilisatoren zugesetzt wurden, wie oben unter I. bewertet.

**Tab. 1**

| Testrezepturen | | | | | | | |
|---|---|---|---|---|---|---|---|
| Rezeptur | 1 | 2 | 3 | 4 | 5 | 6 | 7 |
| Beispiel | 11 | 12 | 13 | 14 | 15 | 16 | 17 |
| Tabelle | 2 | 3 | 4 | 5 | 6 | 7 | 8 |
| PVC | 100 | 100 | 100 | 100 | 100 | 100 | 100 |
| Kreide | 5 | 5 | 5 | - | - | 5 | - |
| TiO₂ | 4 | 4 | 4 | - | - | 4 | - |
| GM^{a)} | 0.5 | 0.5 | 0.5 | - | - | 0.5 | 0.3 |
| Bisphenol A | 0.1 | 0.1 | 0.1 | 0.1 | 0.1 | 0.1 | 0.1 |
| Irg. 17 MOK | - | - | - | - | - | 1 | 1 |
| Calciumstearat | 0.5 | 0.5 | 0.5 | 0.8 | - | 1 | - |
| Bariumstearat | - | - | - | - | 0.8 | - | - |
| Zinkstearat | 0.8 | 0.8 | 0.8 | 0.8 | 0.8 | - | - |
| Pentaerythrit | 0.4 | 0.4 | 0.4 | - | - | - | - |
| Dibenzoylmethan | 0.1 | - | - | - | - | - | - |
| Ca-Acetylacetonat | - | - | 0.1 | - | - | - | - |
| DOP | - | - | - | 40 | 40 | - | 50 |
| TNPP | - | - | - | 0.5 | - | - | - |
| Probe | 1 | 1 | 1 | 1 | 1 | 1 | 1 |

| | | | | | | | |
|---|---|---|---|---|---|---|---|
| ^{a)} Paraffinwachs als Gleitmittel | | | | | | | |

### Beispiel 11

**Tab. 2**

| Testrezeptur 1 | | | | | | | | | | | |
|---|---|---|---|---|---|---|---|---|---|---|---|
| Verbindung | MTT/min. | VDE/min. | YI0 | YI10 | YI20 | YI30 | YI40 | YI50 | YI60 | YI70 | YI80 |
| ohne Probe | 57 | 14:00 | 6.5 | 8.3 | 12.2 | 17.3 | 31.5 | 36.7 | | | |
| Verbindg 1 | 67 | 16:50 | 5.0 | 7.1 | 11.0 | 16.8 | 27.0 | 30.1 | 35.1 | | |
| Verbindg 2 | 68 | 16:00 | 5.9 | 7.0 | 9.3 | 13.1 | 24.4 | 28.0 | 33.5 | | |
| Verbindg 3 | 73 | 17:15 | 5.0 | 7.4 | 10.8 | 14.3 | 24.4 | 27.8 | 33.4 | 47.9 | |
| Verbindg 4 | 66 | 15:45 | 5.6 | 7.5 | 9.9 | 14.5 | 25.9 | 29.5 | 34.6 | | |
| Verbindg 5 | 71 | 17:00 | 5.3 | 7.5 | 11.3 | 16.0 | 28.7 | 32.2 | 36.3 | 50.2 | |
| Verbindg 6 | 85 | 20:00 | 5.5 | 7.3 | 9.7 | 13.7 | 24.4 | 27.4 | 31.8 | 35.6 | 48.1 |
| Verbindg 7 | 68 | 16:45 | 5.4 | 7.1 | 9.9 | 14.0 | 27.2 | 30.3 | 35.9 | | |
| Verbindg 8 | 103 | 22:00 | 5.5 | 7.8 | 10.9 | 15.7 | 27.7 | 31.1 | 36.4 | 37.3 | 43.8 |
| Verbindg 9 | 74 | 18:00 | 5.7 | 6.9 | 8.8 | 11.7 | 23.0 | 26.8 | 33.5 | 45.9 | |
| Verbindg 10 | 75 | 19:00 | 5.6 | 6.2 | 9.4 | 12.4 | 27.0 | 27.3 | 33.9 | 46.3 | |

### Beispiel 12

**Tab. 3**

| Testrezeptur 2 | |
|---|---|
| Verbindung | MTT/min. |
| ohne Probe | 44 |
| Verbindg 1 | 51 |
| Verbindg 3 | 53 |
| Verbindg 4 | 50 |
| Verbindg 7 | 51 |
| Verbindg 8 | 69 |
| Verbindg 9 | 72 |
| Verbindg 10 | 52 |

### Beispiel 13

**Tab. 4**

| Testrezeptur 3 | |
|---|---|
| Verbindung | MTT/min. |
| ohne Probe | 59 |
| Verbindg 1 | 78 |
| Verbindg 3 | 91 |
| Verbindg 4 | 77 |
| Verbindg 7 | 81 |
| Verbindg 8 | 102 |
| Verbindg 9 | 86 |
| Verbindg 10 | 85 |

### Beispiel 14

**Tab. 5**

| Testrezeptur 4 | |
|---|---|
| Verbindung | MTT/min. |
| ohne Probe | 36 |
| Verbindg 1 | 43 |
| Verbindg 2 | 42 |
| Verbindg 4 | 44 |
| Verbindg 8 | 85 |
| Verbindg 9 | 86 |
| Verbindg 10 | 58 |

### Beispiel 15

**Tab. 6**

| Testrezeptur 5 | |
|---|---|
| Verbindung | MTT/min. |
| ohne Probe | 35 |
| Verbindg 1 | 63 |
| Verbindg 2 | 65 |
| Verbindg 4 | 62 |
| Verbindg 7 | 65 |
| Verbindg 8 | 80 |
| Verbindg 9 | 78 |
| Verbindg 10 | 62 |

### Beispiel 16

**Tab. 7**

| Testrezeptur 6 | |
|---|---|
| Verbindung | MTT/min. |
| ohne Probe | 95 |
| Verbindg 1 | 115 |
| Verbindg 2 | 110 |
| Verbindg 3 | 125 |
| Verbindg 4 | 125 |
| Verbindg 8 | 135 |
| Verbindg 9 | 130 |
| Verbindg 10 | 125 |

### Beispiel 17

**Tab. 8**

| Testrezeptur 7 | |
|---|---|
| Verbindung | MTT/min. |
| ohne Probe | 105 |
| Verbindg 1 | 175 |
| Verbindg 2 | 180 |
| Verbindg 3 | 170 |
| Verbindg 4 | 140 |
| Verbindg 5 | 190 |
| Verbindg 6 | 190 |
| Verbindg 7 | 170 |
| Verbindg 10 | 210 |

### III. Herstellung der erfindungsgemäßen Verbindungen gemäß der Ausführungsform nach Anspruch 6

### Beispiel 1 (Verbindg 1)

In einem 500mL-Dreihalskolben mit Kühler, Thermometer und Tropftrichter werden in 150 mL destilliertes Wasser 0.46 mol (34.1 g) Ca(OH)₂ suspendiert. Dazu tropft man langsam unter Rühren 0.34 mol (31.2 g) NaAlO₂ und gibt 0.27 mol (31.3 g) Maleinsäure dazu. Dann läßt man 30 min. rühren. Danach kühlt man auf ca. 0°C und tropft vorsichtig 0.1 mol (19.0 g) Titantetrachlorid dazu. Anschließend erhitzt man auf 85°C und rührt bei dieser Temperatur fünf Stunden lang. Danach wird abfiltriert, auf < 1 µm gemahlen, gewaschen und bei etwa 120°C im Vakuum getrocknet.
- Erhaltenes Produkt:: Ca_{0.46}Ti_{0.10}Al_{0.34}(OH)_{1.8}(C₄H₂O₄)_{0.27}
- Analyse :: Ca 19.9% (ber. 19.6)
Ti 4.5% (ber. 5.1)
Al 10.1% (ber. 9.8)

### Beispiel 2 (Verbindg 2)

In einem 500mL-Dreihalskolben mit Kühler, Thermometer und Tropftrichter werden in 150 mL destilliertes Wasser 0.43 mol (30.1 g) Ca(OH)₂ suspendiert. Dazu tropft man langsam unter Rühren 0.37 mol (30.3 g) NaAlO₂ und gibt 0.24 mol (27.8 g) Maleinsäure dazu. Dann läßt man 30 min. rühren. Danach kühlt man auf ca. 0°C und tropft vorsichtig 0.10 mol (26.0 g) Zinntetrachlorid dazu. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.43}Sn_{0.10}Al_{0.37}(OH)_{1.9}(C₄H₂O₄)_{0.24}
- Analyse :: Ca 17.1% (ber. 17.4)
Sn 13.2% (ber. 12.0)
Al 9.7% (ber. 10.1)

### Beispiel 3 (Verbindg 3)

In einem 500mL-Dreihalskolben mit Kühler, Thermometer und Tropftrichter werden in 150 mL destilliertes Wasser 0.48 mol (35.5 g) Ca(OH)₂ suspendiert. Dazu tropft man langsam unter Rühren 0.31 mol (25.4 g) NaAlO₂ und gibt 0.07 mol (81 g) Fumarsäure dazu. Dann läßt man eine halbe Stunde rühren. Danach kühlt man auf ca. 0°C und tropft vorsichtig 0.1 mol (23.3 g) Zirkontetrachlorid dazu. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.48}Zr_{0.10}Al_{0.31}(OH)_{2.15}(C₄H₂O₄)_{0.07}
- Analyse :: Ca 24.2% (ber. 23.6)
Zr 10.7% (ber. 11.2)
Al 9.9% (ber. 10.3)

### Beispiel 4 (Verbindg 4)

In einem 500mL-Dreihalskolben mit Kühler, Thermometer und Tropftrichter werden in 150 mL destilliertes Wasser 0.4 mol (29.6 g) Ca(OH)₂ suspendiert. Dazu tropft man langsam unter Rühren 0.36 mol (29.5 g) NaAlO₂ und 0.13 mol (10.7 g) phosphorige Säure. Dann läßt man eine halbe Stunde rühren und kühlt anschließend auf ca 0°C ab. Bei dieser Temperatur tropft man dann vorsichtig 0.1 mol (19.0 g) Titantetrachlorid dazu. Dann erhitzt man auf 85°C und läßt bei dieser Temperatur fünf Stunden rühren. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Ca_{0.40}Ti_{0.10}Al_{0.36}(OH)_{2.1}(HPO₃)_{0.13}
- Analyse :: Ca 19.8% (ber. 20.9)
Ti 6.4% (ber. 6.3)
Al 11.5% (ber. 12.7)
P 5.8% (ber. 5.3)

### Beispiel 5 (Verbindg 5)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1 mol (26.0 g) SnCl₄ zu und läßt wiederum einige Zeit rühren. Der pH-Wert liegt nach der Zugabe von SnCl₄ bei 7,4. Nach einer Stunde Rührzeit ist der pH-Wert auf 10,1 gestiegen. Nun wird auf pH-Wert von 9 CO₂ eingeleitet, das danach wieder auf pH-Wert 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Sn_{0.10}Al_{0.31}(OH)_{1.7}(CO₃)_{0.32}
- Analyse :: Mg 14.2% (ber. 14.9)
Sn 14.4% (ber. 14.8)
Al 10.2% (ber. 10.4)
CO₂18.1% (ber. 17.5)

### Beispiel 6 (Verbindg 6)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1 mol (23.3 g) ZrCl₄ zu und läßt wiederum einige Zeit rühren. Der pH-Wert liegt nach der Zugabe von ZrCl₄ bei 10 . Nun wird auf pH-Wert von 9 CO₂ eingeleitet, das danach wieder auf pH-Wert von 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Zr_{0.10}Al_{0.31}(OH)_{1.8}(CO₃)_{0.27}
- Analyse: Mg 16.0% (ber. 15.7)
Zr 11.8% (ber. 12.0)
Al 12.0% (ber. 11.0)
CO₂15.7% (ber. 15.6)

### Beispiel 7 (Verbindg 7)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1 mol (19.0 g) TiCl₄ zu und läßt wiederum einige Zeit rühren. Der pH-Wert liegt nach der Zugabe von TiCl₄ bei 10,7. Nun wird auf pH-Wert von 9 CO₂ eingeleitet, das danach wieder auf pH-Wert von 10 verkocht wird. Anschließend erhitzt man auf 85°C und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Ti_{0.10}Al_{0.31}(OH)_{1.8}(CO₃)_{0.27}
- Analyse :: Mg 16.5% (ber. 16.8)
Ti 6.4% (ber. 6.7)
Al 11.8% (ber. 11.7)
CO₂15.8% (ber. 16.0)

### Beispiel 8 (Verbindg 8)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1- mol (26.0 g) SnCl₄ zu und läßt wiederum einige Zeit rühren. Der pH-Wert liegt nach der Zugabe von SnCl₄ bei 7,4. Nach einer Stunde Rührzeit ist der pH-Wert auf 10,1 gestiegen. Nun wird auf pH-Wert von 9 CO₂ eingeleitet, das danach wieder auf pH-Wert 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Sn_{0.10}Al_{0.31}(OH)_{1.9}(CO₃)_{0.22}
- Analyse :: Mg 16.2% (ber. 15.4)
Sn 15.4% (ber. 15.3)
Al 11.3% (ber. 10.8)
CO₂11.8% (ber. 12.5)

### Beispiel 9 (Verbindg 9)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1 mol (23.3 g) ZrCl₄ zu und läßt wiederum einige Zeit rühren. Der pH-Wert liegt nach der Zugabe von ZrCl₄ bei 10 . Nun wird auf pH-Wert von 9 CO₂ eingeleitet, das danach wieder auf pH-Wert von 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Zr_{0.10}Al_{0.31}(OH)_{1.8}(CO₃)_{0.27}
- Analyse :: Mg 15.2% (ber. 15.7)
Zr 11.9% (ber. 12.0)
Al 11.3% (ber. 11.0)
CO₂14.8% (ber. 15.6)

### Beispiel 10 (Verbindg 10)

In einem 1 L Rundkolben werden 0.31 mol (36.6 g) NaAl(OH)₄ in 300 mL destilliertem Wasser gelöst. Dazu gibt man 0.5 mol (20.0 g) Magnesiumoxid und läßt eine halbe Stunde rühren. Anschließend gibt man im Tropftrichter 0.1 mol (19.0 g) TiCl₄ zu und läßt wiederum einige Zeit rühren. Der pH-Wert liegt nach der Zugabe von TiCl₄ bei 10,7. Nun wird auf pH-Wert von 9 CO₂ eingeleitet, das danach wieder auf pH-Wert von 10 verkocht wird. Anschließend erhitzt man auf 180°C im Autoklaven und rührt bei dieser Temperatur fünf Stunden lang. Der erhaltene Niederschlag wird abfiltriert, mit Wasser gewaschen, auf < 1 µm gemahlen, mit 2% Natriumstearat gecoatet und bei 120°C im Vakuum getrocknet.
- Erhaltenes Produkt:: Mg_{0.50}Ti_{0.10}Al_{0.31}(OH)_{2.1}(CO₃)_{0.11}
- Analyse :: Mg 17.3% (ber. 17.8)
Ti 6.6% (ber. 7.1)
Al 12.1% (ber. 12.4)
CO₂ 8.0% (ber. 7.2)

### Anwendung dieser Verbindungen als Stabilisatoren

In den nach folgenden Beispielen wird die Hitzestabilität, die Anfangsfabe und der Farbverlauf von PVC-Formkörpern, denen erfindungsgemäße Verbindungen sowie zu Vergleichzwecken keine Costabilisatoren zugesetzt wurden, wie oben unter I. beschrieben bewertet.

**Tab. 1**

| Testrezepturen | | | | | | | |
|---|---|---|---|---|---|---|---|
| Rezeptur | 1 | 2 | 3 | 4 | 5 | 6 | 7 |
| Beispiel | 11 | 12 | 13 | 14 | 15 | 16 | 17 |
| Tabelle | 2 | 3 | 4 | 5 | 6 | 7 | 8 |
| PVC | 100 | 100 | 100 | 100 | 100 | 100 | 100 |
| Kreide | 5 | 5 | 5 | - | - | 5 | - |
| TiO₂ | 4 | 4 | 4 | - | - | 4 | - |
| GM^{a)} | 0.5 | 0.5 | 0.5 | - | - | 0.5 | 0.3 |
| Bisphenol A | 0.1 | 0.1 | 0.1 | 0.1 | 0.1 | 0.1 | 0.1 |
| Irg. 17 MOK | - | - | - | - | - | 1 | 1 |
| Calciumstearat | 0.5 | 0.5 | 0.5 | 0.8 | - | 1 | - |
| Bariumstearat | - | - | - | - | 0.8 | - | - |
| Zinkstearat | 0.8 | 0.8 | 0.8 | 0.8 | 0.8 | - | - |
| Pentaerythrit | 0.4 | 0.4 | 0.4 | - | - | - | - |
| Dibenzoylmethan | 0.1 | - | - | - | - | - | - |
| Ca-Acetylacetonat- | | - | 0.1 | - | - | - | - |
| DOP | - | - | - | 40 | 40 | - | 50 |
| TNPP | - | - | - | 0.5 | - | - | - |
| Probe | 1 | 1 | 1 | 1 | 1 | 1 | 1 |

| | | | | | | | |
|---|---|---|---|---|---|---|---|
| ^{a)} Paraffinwachs als Gleitmittel | | | | | | | |

### Beispiel 11

**Tab. 2**

| Testrezeptur 1 | | |
|---|---|---|
| Verbindung | MTT/min. | VDE/min. |
| ohne Probe | 60 | 14:20 |
| Verbindg 1 | 65 | 17:00 |
| Verbindg 2 | 65 | 16:25 |
| Verbindg 3 | 75 | 17:05 |
| Verbindg 4 | 65 | 16:00 |
| Verbindg 5 | 70 | 17:00 |
| Verbindg 6 | 85 | 19:35 |
| Verbindg 7 | 65 | 16:15 |
| Verbindg 8 | 100 | 21:20 |
| Verbindg 9 | 80 | 17:10 |
| Verbindg 10 | 70 | 16:55 |

### Beispiel 12

**Tab. 3**

| Testrezeptur 2 | |
|---|---|
| Verbindung | MTT/min. |
| ohne Probe | 45 |
| Verbindg 1 | 50 |
| Verbindg 2 | 55 |
| Verbindg 4 | 50 |
| Verbindg 6 | 50 |
| Verbindg 8 | 75 |
| Verbindg 9 | 70 |
| Verbindg 10 | 55 |

### Beispiel 13

**Tab. 4**

| Testrezeptur 3 | |
|---|---|
| Verbindung | |
| ohne Probe | 60 |
| Verbindg 1 | 75 |
| Verbindg 2 | 80 |
| Verbindg 4 | 75 |
| Verbindg 7 | 80 |
| Verbindg 8 | 95 |
| Verbindg 9 | 80 |
| Verbindg 10 | 80 |

### Beispiel 14

**Tab. 5**

| Testrezeptur 4 | |
|---|---|
| Verbindung | MTT/min. |
| ohne Probe | 35 |
| Verbindg 1 | 40 |
| Verbindg 3 | 50 |
| Verbindg 4 | 45 |
| Verbindg 8 | 85 |
| Verbindg 9 | 80 |
| Verbindg 10 | 55 |

### Beispiel 15

**Tab. 6**

| Testrezeptur 5 | |
|---|---|
| Verbindung | MTT/min. |
| ohne Probe | 35 |
| Verbindg 1 | 55 |
| Verbindg 2 | 60 |
| Verbindg 3 | 65 |
| Verbindg 7 | 65 |
| Verbindg 8 | 80 |
| Verbindg 9 | 75 |
| Verbindg 10 | 55 |

### Beispiel 16

**Tab. 7**

| Testrezeptur 6 | |
|---|---|
| Verbindung | MTT/min. |
| ohne Probe | 95 |
| Verbindg 1 | 105 |
| Verbindg 2 | 105 |
| Verbindg 3 | 120 |
| Verbindg 4 | 110 |
| Verbindg 8 | 125 |
| Verbindg 9 | 120 |
| Verbindg 10 | 120 |

### Beispiel 17

**Tab. 8**

| Testrezeptur 7 | |
|---|---|
| Verbindung | MTT/min. |
| ohne Probe | 105 |
| Verbindg 1 | 150 |
| Verbindg 2 | 155 |
| Verbindg 3 | 165 |
| Verbindg 4 | 150 |
| Verbindg 5 | 175 |
| Verbindg 6 | 175 |
| Verbindg 7 | 160 |
| Verbindg 10 | 150 |

## Patentansprüche

1. Basische Schichtgitterverbindungen der allgemeinen Formel (I):
Me^{III} ₐMe^{II} _{b} (Me^{IV})_{c}(OH)_{d}Oₑ Aⁿ _{f} x mH₂O (I)
worin bedeuten:
Me^{II} ein divalentes Metall, ausgewählt aus der Gruppe, die besteht aus Magnesium, Calcium, Barium, Strontium, Zink, Blei^{II}, Cadmium oder einer Mischung davon;
Me^{III} ein trivalentes Metall, ausgewählt aus der Gruppe, die besteht aus Aluminium, Wismuth, Antimon, Titan^{III}, Eisen^{III} oder einer Mischung davon;
Me^{IV} ein vierwertiges Metall, ausgewählt aus der Gruppe, die besteht aus Titan^{IV}, Zinn, Zirkon oder einer Mischung davon, oder Me^{IV}O, worin Me^{IV} die zuvor angegebene Bedeutung hat;
Aⁿ ein Anion bedeutet, das die Wertigkeit n hat und aus der Gruppe, die aus Sulfat, Sulfit, Sulfid, Thiosulfat, Hydrogensulfat, Hydrogensulfit, Hydrogensulfid, Peroxid, Peroxosulfat, Carbonat, Hydrogencarbonat, Nitrat, Nitrit, Phosphat, Pyrophosphat, Phophit, Pyrophosphit, Hydrogenphosphat, Hydrogenphosphit, Dihydrogenphosphat, Dihydrogenphosphit, Halogenid, Pseudohalogenid, Halogenit, Halogenat, Perhalogenat, I_{3⁻}, Permanganat, Amid, Azid, Hydroxyd, Hydroxylamid, Hydrazid, Acetylacetonat, einem Anion einer organischen Carbonsäure mit ein oder mehreren Carbonsäuregruppen, einem Anion von ein- oder mehrwertigen Phenolen, oder einer Mischung davon besteht, ausgewählt wird;
wobei a/b= 1:1 bis 1:10; 2 ≤ b ≤ 10 ; 0< c <5; 0 ≤ e; 0 ≤ m < 5 betragen und d, e und f so gewählt sind, daß ein basisches, ladungsfreies Molekül entsteht.

2. Basische Schichtgitterverbindungen nach Anspruch 1, dadurch gekennzeichnet, daß a/b=1:1 bis 1:9 ist.

3. Basische Schichtgitterverbindungen der allgemeinen Formel (I) nach Anspruch 1, worin Me^{II}, Me^{III} und Aⁿ die oben angegebenen Bedeutungen besitzen und Me^{IV} Me^{IV}O, wobei Me^{IV} ein vierwertiges Metall, ausgewählt aus der Gruppe, die besteht aus Titan^{IV}, Zinn, Zirkon oder einer Mischung davon, bedeutet und a/b= 1:1 bis 1:10; 2 ≤ b ≤ 10 ; 0< c <5; 0 < d; 0 ≤ e; 0 ≤ m < 5 betragen und d, e und f so gewählt sind, daß ein basisches, ladungsfreies Molekül entsteht.

4. Basische Schichtgitterverbindungen nach Anspruch 3, dadurch gekennzeichnet, daß a/b=2:4 bis 2:6 ist.

5. Basische Schichtgitterverbindungen der allgemeinen Formel (II):
Me^{III} ₐ (Me^{II} _{b} Me^{IV} _{(1-b/2)})₍₁₋ₐ₎(OH)₂ Aⁿ _{a/n} x mH₂O (II)
worin Me^{II}, Me^{III} und Aⁿ die oben angegebenen Bedeutungen besitzen und Me^{IV} ein vierwertiges Metall, ausgewählt aus der Gruppe, die besteht aus Titan^{IV}, Zinn, Zirkon oder einer Mischung davon, bedeutet und 0,05 < a < 0,5, 0 < b < 1 und 0 ≤ m < 2 sind.

6. Basische Schichtgitterverbindungen der allgemeinen Formel (III):
Me^{III} ₐ (Me^{II} _{b} Me^{IV} _{(1-b/2)})₍₁₋ₐ₎(OH)_{c} Aⁿ _{d} x mH₂O (III)
worin Me^{II}, Me^{III} und Aⁿ die oben angegebenen Bedeutungen besitzen und Me^{IV} ein vierwertiges Metall, ausgewählt aus der Gruppe, die besteht aus Titan^{IV}, Zinn, Zirkon oder einer Mischung davon, bedeutet und 0,05 < a < 0,5, 0 < b < 1, 0 ≤ m < 2 und c+d=2+a, worin c=2 ausgenommen ist, sind.

7. Basische Schichtgitterverbindungen nach einem der vorhergehenden Ansprüche, dadurch gekennzeichnet, daß das divalente Metall Me^{II} aus Mg, Ca, Sn, Zn oder einer Mischung davon ausgewählt wird.

8. Basische Schichtgitterverbindungen nach einem der vorhergehenden Ansprüche, dadurch gekennzeichnet, daß das trivalente Metall Me^{III} aus Al, Fe oder einer Mischung davon ausgewählt wird.

9. Basische Schichtgitterverbindungen nach einem der vorhergehenden Ansprüche, dadurch gekennzeichnet, daß das vierwertige Metall^{IV} aus Ti, Zr, Sn oder einer Mischung davon ausgewählt wird.

10. Basische Schichtgitterverbindungen nach einem der vorhergehenden Ansprüche, dadurch gekennzeichnet, daß das Anion aus Carbonat, Phosphit, Hydroxid, Maleat, Fumarat, Phthalat oder einer Mischung davon ausgewählt wird.

11. Basische Schichtgitterverbindungen nach einem der vorhergehenden Ansprüche, dadurch gekennzeichnet, daß das divalente Metall Me^{II} Mg, das trivalente Metall Me^{III} Al, das vierwertige Metall^{IV} Ti und das Anion Carbonat ist.

12. Verfahren zur Herstellung der basischen Schichtgitterverbindungen nach einem der vorhergehenden Ansprüche, dadurch gekennzeichnet, daß Me^{II} als Hydroxid, Oxid oder eine Mischung davon, Me^{III} als Hydroxid, auch als Mischsalz mit NaOH, sowie Me^{IV} als Hydroxid, Oxysalz, Oxid oder Mischungen davon mit einer entsprechenden Säure, dem Salz der entsprechenden Säure oder Mischungen davon, wobei das Anion der Säure die in Anspruch 1 angegebene Bedeutung hat, in einem wäßrigem Medium bei einem pH-Wert von 8 bis 12 bei Temperaturen von 20 bis 250°C umgesetzt werden.

13. Verfahren zur Herstellung der basischen Schichtgitterverbindungen nach Anspruch 12, dadurch gekennzeichnet, daß die Umsetzung bei einem pH-Wert von 9 bis 11 bei Temperaturen von 60 bis 180°C durchgeführt wird.

14. Verfahren zur Herstellung der basischen Schichtgitterverbindungen nach einem der Ansprüche 12 oder 13, dadurch gekennzeichnet, daß Me^{IV} als frisch gefälltes Hydroxid, Oxysalz, Oxid oder Mischungen davon eingesetzt wird.

15. Verwendung der basischen Schichtgitterverbindungen nach einem der Ansprüche 1 bis 11 zur Stabilisierung von halogenhaltigen thermoplastischen Harzen, insbesondere PVC.

16. Stabilisator für halogenhaltige Polymere, insbesondere für PVC, dadurch gekennzeichnet, daß er einen Gehalt an mindestens einer Schichtgitterverbindung nach einem der Ansprüche 1 bis 11 aufweist.

17. Stabilisator nach Anspruch 16, dadurch gekennzeichnet, daß er zusätzlich einen Gehalt an mindestens einem Costabilisator, ausgewählt aus der Gruppe der Metallcarboxylate, 1,3-Diketoverbindungen, organischen Ester der phoshorigen Säure, Polyolen und Aminosäurederivaten, Antioxidantien und Epoxyverbindungen, aufweist.

18. Verfahren zur Herstellung von halogenhaltigen thermoplastischen Harzen, dadurch gekennzeichnet, daß man den halogenhaltigen thermoplastischen Harzen in der Schmelze einen Stabilisator nach einem der Ansprüche 16 bis 17 in einer Menge von 0,1 bis 5 Teilen auf 100 Teile Harz zusetzt, innig vermischt und abkühlen läßt.

19. Halogenhaltige thermoplastische Harze, gekennzeichnet durch einen Gehalt von 0,1 bis 5 Teilen Stabilisator nach einem der Ansprüche 16 bis 17 auf 100 Teile Harz.

20. Halogenhaltige thermoplastische Harze nach Anspruch 19, ausgewählt aus der Gruppe, bestehend aus PVC, Polyvinylidenchlorid, chloriertem oder chlorsulfoniertem Polyethylen, chloriertem Polypropylen oder chloriertem Ethylen/Vinylacetat-Copolymer.

## Claims

1. Basic layer lattice compounds of the general formula (I):
Me^{III} ₐ Me^{II} _{b} (Me^{IV})_{c}(OH)_{d}Oₑ Aⁿ _{f} x mH₂0 (I)
wherein
Me^{II} represents a divalent metal, chosen from group comprising magnesium, calcium, barium, strontium, zinc, lead^{II}, cadmium or a mixture thereof;
Me^{III} represents a trivalent metal, chosen from the group comprising aluminium, bismuth, antimony, titanium^{III}, iron^{III} or a mixture thereof;
Me^{IV} represents a quadrivalent metal, chosen from the group comprising titanium^{IV}, tin, zirconium or a mixture thereof, or Me^{IV}O, wherein Me^{IV} has the previously indicated meaning;
Aⁿ represents an anion which has the valency n and is chosen from the group comprising sulphate, sulphite, sulphide, thiosulphate, hydrogen sulphate, hydrogen sulphite, hydrogeon sulphide, peroxide, peroxosulphate, carbonate, hydrogen carbonate, nitrate, nitrite, phosphate, pyrophosphate, phosphite, pyrophosphite, hydrogen phosphate, hydrogen phosphite, dihydrogen phosphate, dihydrogen phosphite, halide, pseudohalide, halogenite, halogenate, perhalogenate, I₃⁻, permanganate, amide, azide, hydroxide, hydroxylamide, hydrazide, acetyl acetonate, an anion of an organic carboxylic acid having one or more carboxylic acid groups, an anion of mono or polyvalent phenols, or mixture thereof;
wherein a/b= 1:1 to 1:10; 2≤ b ≤ 10; 0< c <5; 0 ≤ e; 0 ≤ m < 5 and d, e and f are chosen so that a basic uncharged molecule occurs.

2. Basic layer lattice compounds according to Claim 1, characterised in that a/b=1:1 to 1:9.

3. Basic layer lattice compounds of the general formula (I) according to Claim 1, wherein Me^{II}, Me^{III} and Aⁿ have the meanings indicated above and Me^{IV} and M^{IV}O, wherein Me^{IV} represents a quadrivalent metal, which is chosen from the group comprising titanium^{IV}, tin, zirconium or a mixture thereof, and a/b= 1:1 to 1:10; 2≤ b ≤ 10; 0< c <5; O < d; 0 ≤ e; 0 ≤ m < 5 and d, e and f are chosen so that a basic uncharged molecule occurs.

4. Basic layer lattice compounds according to Claim 3, characterised in that a/b=2:4 to 2:6.

5. Basic layer lattice compounds of the general formula (II) :
Me^{III} ₐ (Me^{II} _{b} Me^{IV} _{(1-b/2)})₍₁₋ₐ₎(OH)₂ Aⁿ _{a/n} x mH₂0 (II)
wherein
Me^{II}, Me^{III} and Aⁿ have the above-mentioned meanings and Me^{IV} represents a quadrivalent metal chosen from the group comprising titanium^{IV}, tin, zirconium or a mixture thereof, and 0.05 < a < 0.5, 0 < b < 1 and 0 ≤ m < 2.

6. Basic layer lattice compounds of the general formula (III):
Me^{III} ₐ (Me^{II} _{b} Me^{IV} _{(1-b/2}) ₍₁₋ₐ₎ (OH)_{c} Aⁿ _{d} x mH₂0 (III)
wherein
Me^{II}, Me^{III} and Aⁿ have the above-mentioned meanings and Me^{IV} represents a quadrivalent metal chosen from the group comprising titanium^{IV}, tin, zirconium or a mixture thereof, and 0.05 < a < 0.5, 0 < b < 1, 0 ≤ m < 2 and c+d=2+a, wherein c=2 is excluded.

7. Basic layer lattice compounds according to any one of the preceding Claims, characterised in that the divalent metal Me^{II} is chosen from Mg, Ca, Sn, Zn or a mixture thereof.

8. Basic layer lattice compounds according to any one of the preceding Claims, characterised in that the trivalent metal Me^{III} is chosen from Al, Fe or a mixture thereof.

9. Basic layer lattice compounds according to any one of the preceding Claims, characterised in that the quadrivalent metal is chosen from Ti, Zr, Sn or a mixture thereof.

10. Basic layer lattice compounds according to any one of the preceding Claims, characterised in that the anion is chosen from carbonate, phosphite, hydroxide, maleate, fumarate, phthalate or a mixture thereof.

11. Basic layer lattice compounds according to any one of the preceding Claims, characterised in that the divalent metal Me^{II} is Mg, the trivalent metal Me^{III} is Al, the quadrivalent metal is Ti and the anion is carbonate.

12. A method of preparing the basic layer lattice compounds according to any one of the preceding Claims, characterised in that Me^{II} as a hydroxide, oxide or mixture thereof, Me^{III} as a hydroxide, also a mixed salt with NaOH, and also Me^{IV} as hydroxide, oxysalt, oxide or mixtures thereof are reacted with a corresponding acid, the salt of the corresponding acid or mixtures thereof, wherein the anion of the acid has the meaning indicated in Claim 1, in an aqueous medium at a pH value of 8 to 12 at temperatures of 20 to 250°C.

13. A method of preparing the basic layer lattice compounds according to Claim 12, characterised in that the reaction is carried out at a pH value of 9 to 11 at temperatures of 60 to 180°C.

14. A method of preparing the basic layer lattice compounds according to either Claim 12 or Claim 13,
characterised in that Me^{IV} is used as freshly precipitated hydroxide, oxysalt, oxide or mixtures thereof.

15. Use of basic layer lattice compounds according to any one of Claims 1 to 11 for stabilising halogen-containing thermoplastic resins, in particular PVC.

16. A stabiliser for halogen-containing polymers, in particular for PVC, characterised in that it has a content of at least one layer lattice compound according to any one of Claims 1 to 11.

17. A stabiliser according to Claim 16, characterised in that it has additionally a content of at least one co-stabiliser, chosen from the group of the metal carboxylates, 1,3-diketo compounds, organic esters of phosphorous acid, polyols and amino acid derivatives, antioxidants and epoxy . compounds.

18. A method of preparing halogen-containing thermoplastic resins, characterised in that a stabiliser according to either one of Claims 16 and 17 is added to the halogen-containing thermoplastic resins in the melt, is intimately mixed and allowed to cool.

19. Halogen-containing thermoplastic resins,
characterised by a content of 0.1 to 5 parts of stabiliser according to either one of Claims 16 and 17 per 100 parts of resin.

20. Halogen-containing thermoplastic resins according to Claim 19, chosen from the group comprising PVC, polyvinylidene chloride, chlorinated or chlorosulphonated polyethylene, chorinated polypropylene or chlorinated ethylene/vinyl acetate copolymer.

## Revendications

1. Composés basiques à réseau stratifié de formule générale (I) :
Me^{III} ₐ Me^{II} _{b} (Me^{IV})_{c}(OH)_{d}Oₑ Aⁿ _{f} x mH₂O (I)
dans laquelle :
Me^{II} représente un métal divalent choisi dans le groupe constitué du magnésium, du calcium, du baryum, du Strontium, du zinc, du plomb, du cadmium ou un mélange de ceux-ci;
Me^{III} représente un métal trivalent choisi dans le groupe constitué de l'aluminium, du bismuth, de l'antimoine, du titane (III), du fer (III) ou un mélange de ceux-ci;
Me^{IV} représente un métal tétravalent choisi dans le groupe constitué du titane(IV), de l'étain, du zirconium ou un de leurs mélanges, ou bien Me^{IV}O, dans lequel Me^{IV} est tel que défini ci-dessus;
Aⁿ représente un anion de valence n choisi dans le groupe constitué d'un sulfate, d'un sulfite, d'un sulfure, d'un thiosulfate, d'un hydrogénosulfate, d'un hydrogénosulfite, d'un hydrogénosulfure, d'un péroxyde, d'un péroxosulfate, d'un carbonate, d'un hydrogénocarbonate, d'un nitrate, d'un nitrite, d'un phosphate, d'un pyrophosphate, d'un phosphite, d'un pyrophosphite, d'un hydrogénophosphate, d'un hydrogénophosphite, d'un dihydrogénophosphate, d'un dihydrogénophosphite, d'un halogénure, d'un pseudohalogénure, d'un halogénite, d'un halogénate, d'un perhalogénate, de I₃⁻ d'un permanganate, d'un amidure, d'un azoture, d'un hydroxyde, d'un hydroxyamidure, d'un hydrazide, d'un acétylacétonate, d'un anion d'un acide organique carboxylique présentant un ou plusieurs groupes carboxy, d'un anion dérivé d'un phénol mono- ou polyvalent, ou bien un de leurs mélanges;
a/b valant 1:1 à 1:10; 2≤b≤ 10; 0<c<5; 0≤e; 0≤m< 5 et d, e et f étant choisis de façon à conduire à une molécule non chargée basique.

2. Composés basiques à réseau stratifié selon la revendication 1, caractérisés en ce que a/b = 1:1 à 1:9.

3. Composés basiques à réseau stratifié de formule générale (I) selon la revendication 1, dans laquelle Me^{II}, Me^{III} et Aⁿ ont les significations données ci-dessus et Me^{IV} représente Me^{IV}0 où Me^{IV} représente un métal tétravalent choisi dans le groupe constitué du titane (IV), de l'étain, du zirconium ou un de leurs mélanges et a/b = 1:1 à 1:10; 2≤b≤10; 0<c<5; 0<d; 0≤e; 0≤m< 5 et d, e et f sont choisis de façon à conduire à une molécule non chargée basique.

4. Composés basiques à réseau stratifié selon la revendication 3, caractérisés en ce que a/b = 2:4 à 2:6.

5. Composés basiques à réseau stratifié de formule générale (II) :
Me^{III} ₐ (Me^{II} _{b}Me^{IV} _{(1-b/2)})₍₁₋ₐ₎ (OH)₂Aⁿ _{a/n} x mH₂O (II)
dans laquelle Me^{II}, Me^{III} et Aⁿ ont les significations données ci-dessus et Me^{IV} représente un métal tétravalent choisi dans le groupe constitué du titane (IV), de l'étain, du zirconium ou un de leurs mélanges et 0,05 <a<0,5; 0<b<1 et 0≤m<2.

6. Composés basiques à réseau stratifié de formule générale (III) :
Me^{III} ₐ (Me^{II} _{b}Me^{IV} _{(1-b/2)})₍₁₋ₐ₎(OH)_{c} Aⁿ _{d} x mH₂O (III)
dans laquelle Me^{II}, Me^{III} et Aⁿ ont les significations données ci-dessus et Me^{IV} représente un métal tétravalent choisi dans le groupe constitué du titane (IV), de l'étain, du zirconium ou un de leurs mélanges et 0,05<a<0,5; 0<b<1; 0≤m<2 et c+d=2+a à l'exclusion de c = 2.

7. Composés basiques à réseau stratifié selon l'une quelconque des revendications précédentes, caractérisés en ce que le métal bivalent Me^{II} est choisi parmi Mg, Ca, Sn, Zn ou un de leurs mélanges.

8. Composés basiques à réseau stratifié selon l'une quelconque des revendications précédentes, caractérisés en ce que le métal trivalent Me^{III} est choisi parmi Al, Fe ou un de leurs mélanges.

9. Composés basiques à réseau stratifié selon l'une quelconque des revendications précédentes, caractérisés en ce que le métal^{IV} tétravalent est choisi parmi Ti, Zr, Sn ou un de leurs mélanges.

10. Composés basiques à réseau stratifié selon l'une quelconque des revendications précédentes, caractérisés en ce que l'anion est choisi parmi un carbonate, un phosphite, un hydroxyde, un maléate, un fumarate, un phtalate ou un de leurs mélanges.

11. Composés basiques à réseau stratifié selon l'une quelconque des revendications précédentes, caractérisés en ce que le métal^{II} divalent est Mg, le métal^{III} trivalent Al, le métal^{IV} tétravalent est Ti et l'anion est un carbonate.

12. Procédé pour la préparation des composés basiques à réseau stratifié selon l'une quelconque des revendications précédentes, caractérisé en ce que l'on fait réagir dans un milieu aqueux à un pH de 8 à 12 et à une température de 20 à 250°C, Me^{II} sous la forme d'un hydroxyde, d'un oxyde ou d'un de leurs mélanges, Me^{III} sous la forme d'un hydroxyde éventuellement en tant que sel mixte avec NaOH, ainsi que Me^{IV} sous la forme d'un hydroxyde, d'un sel oxy, d'un oxyde ou d'un de leurs mélanges avec un acide correspondant, un sel de l'acide correspondant ou un de leurs mélanges, l'anion de l'acide ayant la signification donnée à la revendication 1.

13. Procédé pour la préparation de composés basiques à réseau stratifié selon la revendication 12, caractérisé en ce que la réaction est réalisée à un pH de 9 à 11 et à une température de 60 à 180°C.

14. Procédé pour la préparation de composés basiques à réseau stratifié selon l'une quelconque des revendications précédentes, caractérisé en ce que Me^{IV} est utilisé sous la forme d'un hydroxyde, d'un sel oxy ou d'un oxyde fraîchement précipité ou bien de leurs mélanges.

15. Utilisation de composés basiques à réseau stratifié selon l'une quelconque des revendications 1 à 11 pour la stabilisation de résines thermoplastiques halogénées, en particulier de PVC.

16. Stabilisateur pour polymères halogénés, en particulier pour PVC, caractérisé en ce qu'il présente une certaine teneur en au moins un composé à réseau stratifié selon l'une quelconque des revendications 1 à 11.

17. Stabilisateur selon la revendication 16, caractérisé en ce qu'il présente en outre une certaine teneur en au moins un co-stabilisateur choisi dans le groupe constitué des carboxylates métalliques, des composés 1,3-dioxo, des esters organiques d'acide phosphoreux, des polyols et des dérivés d'aminoacides, des anti-oxydants et des composés époxy.

18. Procédé pour la préparation de résines thermoplastiques halogénées, caractérisé en ce que l'on ajoute aux résines thermoplastiques halogénées en fusion un stabilisateur selon l'une quelconque des revendications 16 à 17 à raison de 0,1 à 5 parties pour 100 parties de résine, l'on mélange intimement l'ensemble et on laisse refroidir.

19. Résines thermoplastiques halogénées, caractérisées en ce qu'elles présentent une teneur en stabilisateur selon l'une quelconque des revendications 16 à 17 allant de 0,1 à 5 parties pour 100 parties de résine.

20. Résines thermoplastiques halogénées selon la revendication 19 choisies dans le groupe constitué d'un PVC, d'un poly(chlorure de vinylidène), des polyéthylènes chlorés ou chlorosulfonés, des polypropylènes chlorés ou des copolymères éthylène/acétate de vinyle chlorés.
